# EUROPÄISCHE PATENTSCHRIFT

(11) **EP 3 221 653 B1**
(45) Veröffentlichungstag und Bekanntmachung des Hinweises auf die Patenterteilung: **17.10.2018**
(21) Anmeldenummer: 16705435.2
(22) Anmeldetag: 27.01.2016
(51) Int. Cl.: F26B 23/02, F02C 6/18, F26B 25/00

(54) **VERFAHREN UND ANLAGE ZUR OBERFLÄCHENBEHANDLUNG EINES WERKSTÜCKES**
METHOD AND SYSTEM FOR THE SURFACE TREATMENT OF A WORKPIECE
PROCÉDÉ ET SYSTÈME POUR LE TRAITEMENT DE SURFACE D'UNE PIÈCE

(30) Priorität: 02.03.2015 DE 102015102955
(43) Veröffentlichungstag der Anmeldung: 27.09.2017
(73) Patentinhaber: Sturm Maschinen- & Anlagenbau GmbH, 94330 Salching (DE)
(72) Erfinder: WEBER, Ingo, 59227 Ahlen (DE); BURKAMP, Martin, 59755 Arnsberg (DE)
(74) Vertreter: Wunderlich & Heim Patentanwälte Partnerschaftsgesellschaft mbB
(86) Internationale Anmeldenummer: PCT/EP2016/051666
(87) Internationale Veröffentlichungsnummer: WO 2016/139017

(56) Entgegenhaltungen:
- DE-A1-102011 001 374
- DE-U1-202013 105 737

## Beschreibung

Die Erfindung betrifft ein Verfahren zur Oberflächenbehandlung eines Werkstücks, bei dem in einem Arbeitsraum eine Beschichtung auf das Werkstück aufgebracht und/oder das beschichtete Werkstück getrocknet wird, wobei eine mit Schadstoff beladene Abluft entsteht und aus dem Arbeitsraum abgeführt wird, und mittels mindestens einer Gasturbine Wärme für die Oberflächenbehandlung gewonnen und ein Generator zur Stromerzeugung angetrieben werden, gemäß dem Oberbegriff des Anspruchs 1.

Die Erfindung betrifft weiterhin eine Anlage zur Oberflächenbehandlung eines Werkstücks mit einem Arbeitsraum, in welchem die Oberflächenbehandlung durchführbar ist, wobei eine mit Schadstoff beladene Abluft entsteht, einer Abführeinrichtung zum Abführen der mit Schadstoff beladenen Abluft aus dem Arbeitsraum und mindestens einer Gasturbine, welche zum Erzeugen von Wärme für die Oberflächenbehandlung ausgebildet ist und durch welche ein Generator zur Stromerzeugung angetrieben ist, gemäß dem Oberbegriff des Anspruchs 9.

Eine gattungsgemäße Anlage zum Trocknen von Fahrzeugkarossen geht aus der DE 10 2010 001 234 A1 hervor. Dabei wird die zum Trocknen der lackierten Fahrzeugkarossen benötigte Wärme durch eine Gasturbine gewonnen, in welcher unter Zuführung von Frischluft Gas verbrannt wird. Zur Erhöhung der Energieeffizienz ist eine Kraft-Wärme-Kopplung vorgesehen, wobei die Gasturbine einen Generator zur Stromerzeugung antreibt. Weiterhin ist in dieser Druckschrift beschrieben, die Abluft aus einem Trocknertunnel über einen Reinigungsreaktor abzuführen. In der Abluft sind schädliche Lösemittelanteile enthalten, welche thermisch zerstört werden. Hierdurch wird der schädliche Anteil von Lösemitteln in der Abluft reduziert. Die so schadstoffreduzierte Abluft wird nach Durchleitung durch einen Wärmetauscher über einen Kamin an die Umwelt abgegeben.

Aus der DE 20 2013 105 737 U1 ist eine Trocknungsanlage bekannt, welche als Wärmequelle eine oder mehrere Gasturbinen einsetzt. Das Abgas der Gasturbinen wird über eine Abgasleitung zu einem Trocknungsraum geführt, so dass das heiße Abgas zur Trocknung eingesetzt werden kann. Die Abluft aus dem Trocknungsraum wird über einen Abluftwäscher zu den Gasturbinen rückgeführt. In dem Abluftwäscher wird Wasser fein vernebelt in den Abluftstrom gesprüht, um insbesondere Staub- und Lackpartikel aus der Abluft auszuwaschen. Das dabei entstehende Abwasser wird einer biologischen Aufbereitung zugeführt.

Aus der DE 10 2011 001 374 A1 ist eine Lackieranlage bekannt, bei der Schadstoffe einer schadstoffhaltigen Abluft mit einer Gasturbine verbrannt werden.

Der Erfindung liegt die **Aufgabe** zugrunde, ein Verfahren und eine Anlage zur Oberflächenbehandlung von Werkstücken anzugeben, mit welchen eine besonders energieeffiziente Oberflächenbehandlung bei gleichzeitig geringer Schadstoffbelastung der Umwelt durchgeführt werden kann.

Die Aufgabe wird nach der Erfindung zum einen durch ein Verfahren mit den Merkmalen des Anspruchs 1 und zum anderen durch eine Anlage mit den Merkmalen des Anspruchs 9 gelöst. Bevorzugte Ausführungen der Erfindung sind in den jeweils abhängigen Ansprüchen angegeben.

Das erfindungsgemäße Verfahren ist dadurch gekennzeichnet, dass die aus dem Arbeitsraum abgeführte und mit Schadstoff beladene Abluft direkt oder indirekt durch die Gasturbine aufgeheizt wird, dass die aufgeheizte Abluft einer Reinigungseinheit zugeführt wird, durch welche die Schadstoffe der aufgeheizten Abluft bei einer gegebenen Umsetzungstemperatur umgesetzt und reduziert werden, wobei sich die Temperatur der schadstoffreduzierten Abluft erhöht, und dass die schadstoffreduzierte Abluft anschließend einem primären Wärmetauscher zugeführt wird, durch welchen Wärme aus der Abluft abgeführt wird.

Ein Grundgedanke der Erfindung liegt darin, die mit Schadstoff beladene Abluft aus dem Arbeitsraum, in welchem die Oberflächenbehandlung durchgeführt wird, weiter aufzuheizen und mittels einer Reinigungseinheit zu reinigen, in welcher bei einer gegebenen Umsetzungstemperatur, durch welche Schadstoffe der Abluft in eine nicht oder weniger schädliche Form umgewandelt werden. Hierdurch werden die Schadstoffe in der Abluft effizient reduziert. Nach der Erfindung werden eine besonders gute Schadstoffreduzierung und Energieeffizienz dadurch erreicht, dass die aus dem Arbeitsraum abgeführte Abluft durch die Gasturbine aufgeheizt wird. Aufgrund der so erhöhten Temperatur der Abluft erfolgt ein schnellerer und auch verbesserter Abbau der Schadstoffe in der Reinigungseinheit. Diese kann eine Katalysatoreinheit oder einen Nachverbrenner umfassen.

Gemäß einem weiteren Aspekt der Erfindung wird die Gasturbine zur Kraft-Wärme-Kopplung eingesetzt, so das neben der verbesserten Schadstoffreduzierung die Gasturbine sowohl Wärme etwa für die Oberflächenbehandlung liefert, als auch ein Generator zur Stromerzeugung angetrieben wird.

Ein weiterer Aspekt der Erfindung liegt darin, dass der Reinigungseinheit ein Wärmetauscher nachgeschaltet ist, so dass die Wärme in der Abluft genutzt werden kann. Dies führt zu einem weiteren Vorteil der Erfindung, da die Umsetzung der Schadstoffe, insbesondere bei flüchtigen organischen Substanzen als Schadstoffe, in der Reinigungseinheit eine exotherme Reaktion erfolgt. Somit kann die bei der Schadstoffreduzierung gewonnene Wärme über den nachgeschalteten primären Wärmetauscher ebenfalls genutzt und insbesondere zur Oberflächenbehandlung der Werkstücke in dem Arbeitsraum eingesetzt werden.

Das erfindungsgemäße Verfahren ist grundsätzlich für verschiedenste Oberflächenbehandlungen von Werkstücken einsetzbar, bei welchen Werkstücke beschichtet und/oder beschichtete Werkstücke getrocknet werden. Besonders bevorzugt wird das erfindungsgemäße Verfahren bei einem Lackieren oder einem Trocknen von lackierten Werkstücken, insbesondere Fahrzeugteilen und Fahrzeugkarossen eingesetzt.

Durch das erfindungsgemäße Verfahren werden eine sehr gute Energieausbeute und eine hohe Schadstoffreduktion erreicht. Hierdurch kann eine Belastung der Umwelt durch Kohlendioxid sowie durch weitere Schadstoffe, welche sich aus der Oberflächenbehandlung ergeben, in erheblichem Maße reduziert werden. Zugleich ergibt sich durch die bewirkte Energieeinsparung auch eine entsprechende Kostenreduzierung bei der Oberflächenbehandlung.

Eine bevorzugte Weiterbildung der Erfindung besteht darin, dass die Abluft durch die Gasturbine und eine Zusatzfeuerung auf die Umsetzungstemperatur aufgeheizt wird.

Die Abluft, welche aus dem Arbeitsraum abgeführt wird, weist verfahrensbedingt eine Ausgangstemperatur auf, welche gegenüber der Umgebungstemperatur erhöht ist, und insbesondere zwischen 50° C und 200° C beträgt. Nach einer Erkenntnis der Erfindung ist eine weitere Erhöhung der Ablufttemperatur vorteilhaft, um in einer Reinigungseinheit eine verbesserte Umsetzung und Reduzierung der Schadstoffe zu erreichen. Sofern die zusätzliche Aufwärmung der Abluft durch die Gasturbine nicht ausreichend ist oder Temperaturschwankungen in der Abluft durch die Gasturbine nicht in ausreichendem Maße kompensiert werden können, ist eine Zusatzfeuerung vorgesehen. Hierbei handelt es sich vorzugsweise um einen Gasbrenner, welcher ausschließlich Wärme erzeugt. Insbesondere kann die Temperatur der Abluft kontinuierlich gemessen werden, wobei durch entsprechende Verstärkung oder Abschwächung der Zusatzfeuerung Temperaturschwankungen der Ablufttemperatur ausgeglichen werden. Auf diese Weise kann die Temperatur der Abluft bei Eintritt in die Reinigungseinheit auf einen gewünschten, möglichst konstanten Wert eingestellt und gehalten werden. Diese Temperatur liegt im Bereich zwischen 350°C und 450°C. Dies erlaubt eine sichere Betriebsweise der Reinigungseinheit und eine zuverlässige Schadstoffreduktion.

Nach einer Weiterbildung der Erfindung ist es bevorzugt, dass die Abluft zur direkten Aufheizung als Verbrennungsluft in einen Brenner der Gasturbine und/oder der Zusatzfeuerung eingeleitet wird. Bei einer entsprechenden Einstellung des Brenners kann eine erste Schadstoffreduktion der Abluft bei dem Verbrennungsvorgang in den Brenner erfolgen. Insbesondere ergibt sich durch die direkte Aufheizung eine sehr effiziente Temperaturerhöhung der Abluft.

Dabei besteht eine zweckmäßige Ausführungsvariante der Erfindung darin, dass die Abluft vor einem Zuführen als Verbrennungsluft in einen Brenner der Gasturbine auf eine vorgegebene Abkühltemperatur abgekühlt wird, wobei ein mit Schadstoff beladenes Kondensat ausfällt, und dass nach Zuführung der abgekühlten Abluft in die Gasturbine das Kondensat dem Abgas der Gasturbine, insbesondere durch Einsprühen, wieder zugeführt wird. Für einen effizienten Betrieb einer Gasturbine ist es vorteilhaft, dass die Verbrennungsluft keine zu hohe Eingangstemperatur aufweist. Um dies zu erreichen, wird die Abluft als Verbrennungsluft mit einem sekundären Wärmetauscher vor Eintritt in den Brenner der Gasturbine abgekühlt. Beispielsweise kann eine Abkühlung in den Bereich der Umgebungstemperatur, insbesondere auf einen Wert zwischen 30° C und 50° C, erfolgen. Die gewonnene Wärme kann genutzt werden, etwa bei der Oberflächenbehandlung. Das anfallende Kondensat kann einen Anteil von Schadstoffen aufweisen. Das Kondensat kann grundsätzlich zur Entsorgung abgeführt oder aufbereitet werden. Bevorzugt ist es nach der Erfindung, dass das Kondensat dem Abgas der Gasturbine nach dem Verbrennungsprozess wieder zugeführt wird, indem das Kondensat über eine Einspritzeinrichtung in den Abgasstrom nach der Gasturbine eingesprüht oder eingespritzt wird.

Somit können die Schadstoffe in dem Kondensat mit dem Abgasstrom der Reinigungseinheit zugeführt werden. Der Abgasstrom der Gasturbine kann dabei eine Abgastemperatur zwischen 250 ° C bis 400° C, vorzugsweise im Bereich von 300° C aufweisen.

Eine alternative Ausführungsvariante des erfindungsgemäßen Verfahrens besteht darin, dass die Abluft zur indirekten Aufheizung durch einen Aufheiz-Wärmetauscher geleitet wird, welcher von einem Heizmedium durchströmt wird, welches durch die Gasturbine und/oder der Zusatzfeuerung beheizt wird. Hierdurch wird eine Vermischung des Abluftstromes von der Oberflächenbehandlung mit dem Abgasstrom der Gasturbine und/oder der Zusatzfeuerung vermieden. Hierdurch kann unerwünschten Beeinflussungen der Reinigungseinheit durch Schadstoffe im Brenngas für die Gasturbine und/oder die Zusatzfeuerung vorgebeugt werden. Abluft bezeichnet die mit Schadstoffen beladene Prozessluft, welche aus der Lackier-/Trockneranlage austritt. Abgas bezeichnet ein Gas nach einem Verbrennungs- oder Umwandlungsprozess. Das Abgas kann verbrannte Abluft, Frischluft oder eine Mischung hiervon sein.

Grundsätzlich kann der Aufheiz-Wärmetauscher ein getrenntes Heizmedium, insbesondere Wasser aufweisen, welches in einem geschlossenen Kreislauf geführt wird. Bevorzugt ist es nach einer Weiterbildung der Erfindung, dass als Heizmedium das Abgas der Gasturbine und/oder der Zusatzfeuerung verwendet wird. Hierdurch kann eine besonders gute Energieausbeute erreicht werden.

Eine weitere bevorzugte Ausführungsform der Erfindung besteht darin, dass die Zusatzfeuerung der Gasturbine nachgeschaltet ist. Hierdurch können die Gasturbine effizient betrieben und zugleich eine zuverlässige Aufheizung durch die Zusatzfeuerung sichergestellt werden.

Grundsätzlich ist es möglich, die gewonnene Wärme sowie den elektrischen Strom in beliebiger Weise einzusetzen. Besonders effizient ist es nach einer Ausführungsform der Erfindung, dass eine in dem Wärmetauscher gewonnene Wärme dem Arbeitsraum zugeführt wird, in welchem die Oberflächenbehandlung durchgeführt wird. Auch die gewonnene elektrische Energie kann beim Betrieb der erfindungsgemäßen Anlage eingesetzt und verbraucht werden. Damit kann die Energiebilanz des Gesamtsystems verbessert werden.

Die erfindungsgemäße Anlage zur Oberflächenbehandlung eines Werkstücks ist dadurch gekennzeichnet, dass die Gasturbine ausgebildet ist, die aus dem Arbeitsraum abgeführte und mit Schadstoff beladene Abluft direkt oder indirekt aufzuheizen, dass eine Reinigungseinheit vorgesehen ist, zu welcher die aufgeheizte Abluft zuführbar ist und durch welche unter weiterer Erhöhung der Temperatur der Abluft der Schadstoffe bei einer gegebenen Umsetzungstemperatur umsetzbar und reduzierbar sind, und dass der Reinigungseinheit ein primärer Wärmetauscher nachgeschaltet ist, durch welchen Wärme aus der schadstoffreduzierten Abluft abführbar ist. Die erfindungsgemäße Anlage kann insbesondere zur Durchführung des zuvor beschriebenen Verfahrens eingesetzt werden. Hierbei ergeben sich die zuvor beschriebenen Vorteile.

Die erfindungsgemäße Anlage weist eine oder mehrere Gasturbinen auf. Vorzugsweise handelt es sich dabei um Mikrogasturbinen, deren Größe und Anzahl entsprechend dem Wärmebedarf und auch dem Strombedarf angepasst sind. Sofern größere Temperaturschwankungen in der Abluft abzufangen sind, ist es nach einer Weiterbildung der Erfindung bevorzugt, dass zum Aufheizen der Abluft zusätzlich zur Gasturbine mindestens eine Zusatzfeuerung vorgesehen ist. Diese ist vorzugsweise der Gasturbine nachgeschaltet, so dass die Verbrennungsluft für die Gasturbine eine möglichst geringe Eingangstemperatur aufweist. Dies ist für einen effizienten Betrieb der Gasturbine vorteilhaft. Eine Mikrogasturbine weist eine Leistung von unter 1000 kW auf, vorzugsweise ca. 200 kW.

Eine gute Energieausbeute sowie eine hohe Schadstoffreduktion ergeben sich nach einer Weiterbildung der Erfindung dadurch, dass von der Abführeinrichtung eine Abführleitung zu einem Brenner der Gasturbine und/oder der Zusatzfeuerung vorgesehen ist, wobei die Abluft zur direkten Aufheizung dem Brenner als Verbrennungsluft zuführbar ist. Somit können bei dem Verbrennungsprozess in der Gasturbine und in der Zusatzfeuerung eine erste Schadstoffreduktion erreicht werden, da beim Verbrennen ein Teil der Schadstoffe oxidiert und damit zerstört werden können.

Gemäß einer alternativen Ausführungsform der Erfindung ist es vorgesehen, dass die Abführleitung durch einen Abkühl-Wärmetauscher geführt ist, durch welchen die Abluft vor einem Zuführen in den Brenner abkühlbar und ein mit Schadstoff beladenes Kondensat ausfällbar ist, und dass der Gasturbine eine Sprüheinrichtung nachgeschaltet ist, durch welche das ausgefällte Kondensat dem Abgas der Gasturbine wieder zuführbar ist. Durch ein vorausgehendes Abkühlen der Abluft kann insbesondere ein effizienter Betrieb der Gasturbine mit Verdichter erreicht werden. Das beim Abkühlen ausgefällte Kondensat, welches in einem nicht unerheblichen Maße mit Schadstoff beladen ist, kann aus einem Auffangbecken über eine Pumpe zu einer Sprüheinrichtung geleitet werden, durch welche das Kondensat in den Abgasstrom der Gasturbine eingespritzt wird. Hierdurch kann die Gasturbine in gewissem Umfang vor einem negativen korrosiven Einfluss der Schadstoffe geschützt werden. Gleichzeitig ist es nicht erforderlich, das schadstoffbeladene Kondensat separat zu entsorgen oder aufzubereiten. Vielmehr wird das schadstoffbeladene Kondensat nach der Gasturbine wieder in den Abgasstrom rückgeführt, so dass diese Schadstoffe in der Reinigungseinheit aufbereitet und unschädlich gemacht werden können. Vorzugsweise ist die Sprüheinrichtung zur Rückführung des Kondensats in den Abgasstrom zwischen der Gasturbine und der nachgeschalteten Zusatzfeuerung angeordnet. Die Zusatzfeuerung kann so für eine weitere Schadstoffreduktion und eine verbesserte Verdampfung der Schadstoffe im Abgasstrom sorgen.

Eine weitere vorteilhafte Ausführungsvariante der Erfindung besteht darin, dass zwischen der Abführeinrichtung und der Reinigungseinheit eine Zuführleitung vorgesehen ist, welche durch einen Aufheizwärmetauscher geführt ist, welcher durch die Gasturbine und/oder die Zusatzfeuerung beheizt ist. Auf diese Weise kann die Abluft durch die Gasturbine und die Zusatzfeuerung indirekt beheizt werden. Hierdurch kann eine zusätzliche Belastung insbesondere einer Katalysatoreinheit mit zusätzlichen Schadstoffen aus dem Brenngas der Gasturbine oder der Zusatzfeuerung bewahrt werden.

Grundsätzlich kann für die erfindungsgemäße Anlage jede geeigneteReinigungseinheit eingesetzt werden. Besonders bevorzugt ist es, dass die Reinigungseinheit eine Katalysatoreinheit, insbesondere einen Oxidationskatalysator, aufweist. Der Katalysator kann abhängig von den zu erwartenden Schadstoffen eine Beschichtung aus Edelmetallen oder einem anderen geeigneten Material aufweisen, durch welche eine gewünschte chemische Umwandlung der enthaltenen Schadstoffe, insbesondere eine Oxidation der Schadstoffe, gefördert und in einem hohen Maße sichergestellt werden. Vorzugsweise ist dabei die Umsetzungstemperatur in der Katalysatoreinheit im Bereich von 400°C, vorzugsweises zwischen 350° C und 450° C. Die katalytische Umsetzung in der Katalysatoreinheit basiert dabei auf der katalytischen Eigenschaft bestimmter Werkstoffe, insbesondere von Edelmetallen und Edelmetallverbindungen, insbesondere auf Platinbasis. Dabei nehmen die Elemente oder Verbindungen des Katalysators an der Reaktion teil und bilden mit den Oxidationsmitteln und/oder mit den zu oxidierenden Stoffen Zwischenprodukte. Diese Zwischenprodukte sind reaktionsfreudiger als die Ausgangsstoffe und reagieren bei geringerer Temperatur miteinander. Nach der Reaktion lösen sich die Endprodukte wieder vom Katalysatormaterial. Durch Verwendung eines passenden Katalysators kann die notwendige Umsetzungstemperatur zur Oxidation der Schadstoffe merklich herabgesetzt und/oder die Reaktion beschleunigt werden. Das Katalysatormaterial wird dabei nicht verbraucht. Vorzugsweise liegt die bevorzugte Umsetzungstemperatur zur Oxidation leicht flüchtiger Kohlenwasserstoffe in einem Bereich zwischen 350° C bis 380° C. Grundsätzlich kann die Reinigungseinheit einen gasbetriebenen Brenner zur thermischen Nachverbrennung aufweisen.

Die Erfindung wird nachfolgend anhand von Ausführungsbeispielen weiter beschrieben, welche schematisch in den beigefügten Zeichnungen dargestellt sind. In den Zeichnungen zeigen:
- Fig. 1: ein Ablauf- und Anordnungsschema zur direkten Abluftreinigung mit Gasturbine mit katalytischer Nachbehandlung gemäß der Erfindung;
- Fig. 2: ein Ablauf- und Anordnungsschema zur indirekten Abluftreinigung mit Gasturbine mit katalytischer Nachbehandlung gemäß der Erfindung;
- Fig. 3: ein von Fig. 2 abgewandeltes Schema mit Zusatzfeuerung;
- Fig. 4: ein Ablauf- und Anordnungsschema zur direkten Abluftreinigung mit thermischer Nachbehandlung; und
- Fig. 5: ein Ablauf- und Anordnungsschema zur indirekten Abluftreinigung mit thermischer Nachbehandlung.

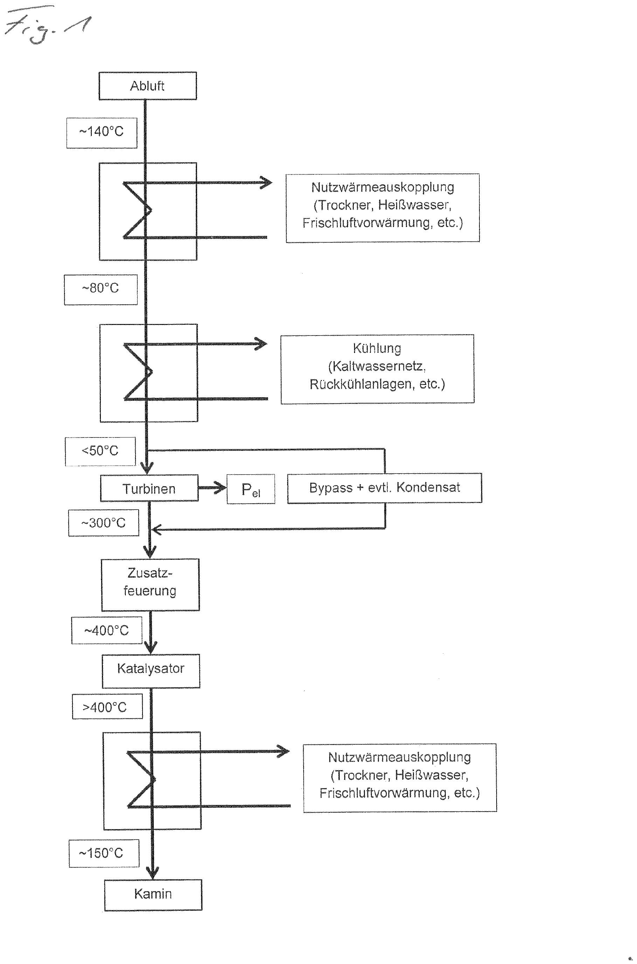

Gemäß dem Schema von Figur 1 wird Abluft aus einer nicht dargestellten Anlage zur Oberflächenbehandlung, insbesondere einer Lackieranlage oder einer Trocknungsanlage für lackierte Werkstücke, über eine Abführeinrichtung, insbesondere eine Ventilationsanlage, abgeführt. Die Abluft ist mit flüchtigen Schadstoffen, insbesondere flüchtigen organischen Substanzen, wie sie bei der Oberflächenbehandlung frei werden, belastet. Zur Reinigung und thermischen Verwertung wird die Abluft, welche abhängig von der Oberflächenbehandlung eine Temperatur von etwa 140°C haben kann, mit einer Abkühl-Wärmetauscheinrichtung abgekühlt. Denn für eine direkte Zuführung der Abluft als Verbrennungsluft in einen Verdichter einer Gasturbine ist es erforderlich, die Verbrennungsluft auf einen Temperaturbereich zwischen -20°C bis 50°C abzukühlen, für welchen üblicherweise eine Gasturbine ausgelegt ist. Zudem erhöhen sich durch ein Abkühlen der Verbrennungsluft die elektrische Leistung und auch der elektrische Wirkungsgrad der Gasturbine.

In einem ersten Abkühlschritt wird so die Abluft von circa 140°C in dem dargestellten Ausführungsbeispiel durch einen ersten Wärmetauscher auf eine Zwischentemperatur von circa 80°C abgekühlt. Die dabei gewonnene Wärmeenergie kann als Nutzwärme zum Trocknen in die Anlage der Oberflächenbehandlung oder in ein Warmwassernetz eingespeist werden. Aufgrund der noch relativ hohen Zwischentemperatur fällt bei dem ersten Wärmetauscher der Abkühl-Wärmetauscheinrichtung noch kein nennenswertes Kondensat an.

Es folgt eine weitere Kühlung, um die nötige Verdichtereintrittstemperatur von unter 50°C zu erreichen, welche in dem dargestellten Ausführungsbeispiel etwa 30°C beträgt. Dazu wird die Wärme an einen Kühlwasserkreislauf abgegeben und das entstehende Kondensat in einem Auffangbecken aufgefangen. Die Rückkühlung des Kühlwassers des Abkühl-Wärmetauschers kann entweder über das Kaltwassernetz oder über eine Trockenkühlung erfolgen. Für den Fall, dass im Trockner oder im Warmwasserkreis bei geringer Anlagenauslastung ein geringer Wärmebedarf herrscht und in der ersten Kühlstufe nicht genügend Wärme abgeführt werden kann, kann in der zweiten Kühlstufe eine gewisse Reserve einkalkuliert werden.

Die gekühlte und teilweise entfeuchtete Abluft wird im Anschluss der Gasturbine zugeführt. Die Abgastemperatur der Gasturbine liegt je nach Temperatur der abgekühlten Abluft bei circa 270°C bis 300°C. Die Gasturbine treibt hierbei in bekannter Weise einen Generator an, durch welchen elektrische Leistung Pₑₗ erzeugt wird.

In den Abgasstrom der Gasturbine kann das anfallende und mit Schadstoff belastete Kondensat rückgeführt werden. Hierzu sind eine Pumpe und eine Eindüseinrichtung vorgesehen. Das Kondensat verdampft und möglicherweise enthaltene Lösemittel werden dadurch der weiteren Abluftreinigung des Abgases wieder zugeführt. Bei entsprechend trockener Abluft kann die Kondensatbehandlung und Kondensatrückführung entfallen.

Im Anschluss an die Eindüsung erfolgt eine weitere Temperaturerhöhung des Abgases mittels einer Zusatzfeuerung, welche insbesondere einen Gasbrenner aufweist. Die Leistung der Zusatzfeuerung ist frei wählbar, um so den notwendigen Wärmebedarf für die nachfolgende Katalysatoreinheit anzupassen. Insbesondere wird durch die Zusatzfeuerung die Abgastemperatur auf einen Temperaturbereich von etwa 400°C angehoben. Bei dieser Temperatur kann eine sehr gute Umsetzung und Zersetzung der Schadstoffe in der Katalysatoreinheit erfolgen. Hierbei handelt es sich im Wesentlichen um eine Oxidation der leicht flüchtigen Kohlenwasserstoffe sowie von Kohlenmonoxid. Bei diesen exothermen Reaktionen ergibt sich eine weitere Temperaturerhöhung des Abgasstromes auf über 400°C, welcher anschließend einem primären Wärmetauscher zur Wärmenutzung zugeführt wird. In diesem primären Wärmetauscher wird die Abgastemperatur auf einen gewünschten Wert von circa 150°C oder darunter abgekühlt. Die angefallene Nutzwärme kann ebenfalls der Anlage zur Oberflächenbehandlung oder einer Frischluft-Vorwärmung zugeführt werden. Der Abgasstrom mit der Restwärme kann anschließend zur weiteren Wärmegewinnung einer weiteren Wärmetauscheinrichtung zugeführt oder unmittelbar einem Kamin zur Abgabe an die Umgebung zugeführt werden.

Bei der Abluftbehandlung gemäß der Anordnung von Figur 1 erfolgt eine direkte Abluftreinigung, bei welcher die Abluft direkt einer Gasturbine als Verbrennungsluft zugeführt wird. Somit werden Abluft und Abgas der Turbine gemeinsam durch die nachfolgende Katalysatoreinheit geleitet.

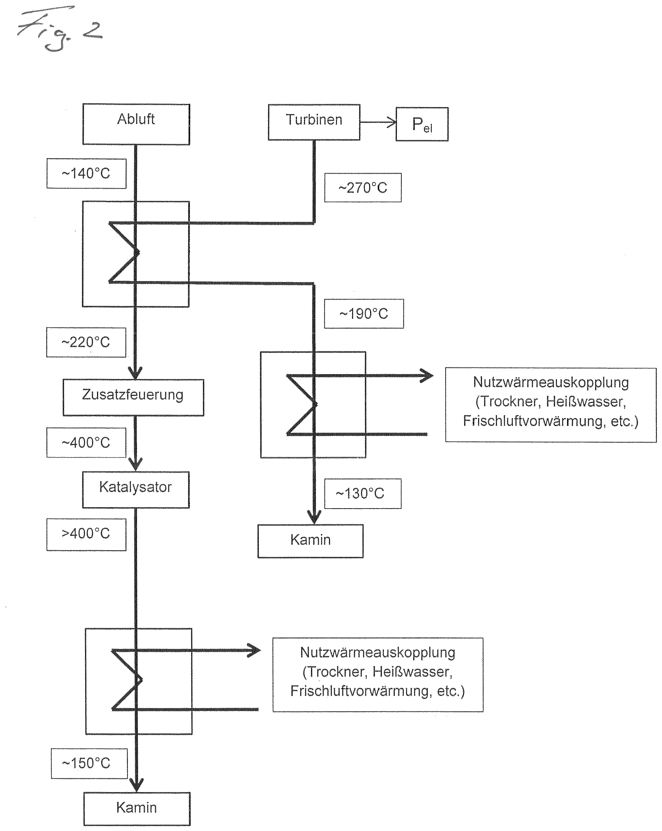

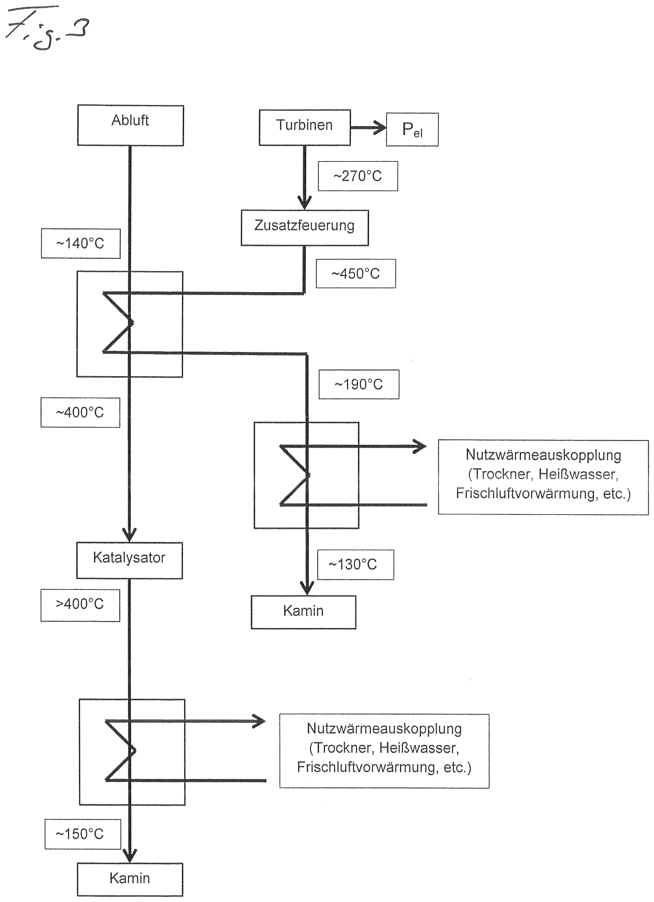

Eine alternative Anordnung mit einer indirekten Abluftreinigung ist in Figur 2 dargestellt. Die indirekte Abluftreinigung basiert noch stärker als die Variante nach Figur 1 auf dem Prinzip der katalytischen Abluftreinigung. Als indirekt wird diese Variante deshalb bezeichnet, weil die Gasturbine nur über die Nutzung ihrer Abgaswärme an der Abluftreinigung beteiligt ist. Bei diesem Konzept wird der Abluftstrom aus der Anlage zur Oberflächenbehandlung getrennt von dem Abgasstrom der Gasturbine und der möglichen Zusatzfeuerung gehalten, wie sie in Fig. 3 gezeigt ist. Die Abluft aus der Anlage, welche insbesondere einen Trockner umfasst, wird bei einer Ausgangstemperatur von circa 140°C zunächst einem Aufheiz-Wärmetauscher zugeführt. Durch diesen Aufheiz-Wärmetauscher wird die Abluft auf circa 400°C entsprechend der gewünschten Umsetzungstemperatur für die nachfolgende Katalysatoreinheit aufgeheizt.

Die Wärmeenergie für den Aufheiz-Wärmetauscher wird über eine Gasturbine und eine Zusatzfeuerung aufgebracht. Die Gasturbine dient neben der Erzeugung der Abwärme auch in diesem Fall zur Erzeugung von Strom mittels eines Generators. Das Abgas der Gasturbine und der Zusatzfeuerung dient als unmittelbares Heizmedium für den Aufheiz-Wärmetauscher. Das Heizmedium kann nach Aufheizung der Abluft einem zweiten Wärmetauscher zugeführt werden. Hierbei wird der Abgasstrom von einer Zwischentemperatur von circa 190°C auf eine Temperatur von etwa 130°C gemäß dem dargestellten Ausführungsbeispiel abgekühlt. Die gewonnene Nutzwärme kann der Anlage zur Oberflächenbehandlung, welche im vorliegenden Fall einen Trockner umfasst, zugeführt werden. Der Abgasstrom mit einer Resttemperatur von circa 130°C kann über einen Kamin an die Umgebung abgegeben werden.

Der davon getrennt geführte Abluftstrom wird nach der Aufheizung auf die Umsetzungstemperatur von circa 400°C der Katalysatoreinheit zugeführt. Hierin erfolgt unter zusätzlicher Wärmegewinnung eine Umsetzung der Schadstoffe, insbesondere eine Oxidation der Schadstoffe zu unbedenklichen Reaktionsprodukten. Anschließend wir der aufgeheizte Abluftstrom mit einer Temperatur von über 400°C einem primären Wärmetauscher zugeführt, welcher Nutzwärme für die Trockneranlage gewinnt. Bei dem dargestellten Ausführungsbeispiel wird der Abgasstrom mit einer Temperatur von über 400°C auf eine Austrittstemperatur von circa 150°C abgekühlt. Bei dieser Temperatur kann die gereinigte und abgekühlte Abluft über einen Kamin an die Umgebung abgegeben werden.

Die Anordnung gemäß Fig. 3 entspricht im Wesentlichen der zuvor beschriebenen Anordnung von Fig. 2. Der maßgebliche Unterschied der Anordnung von Fig. 3 besteht darin, dass die Zusatzfeuerung der Gasturbine unmittelbar nachgeschaltet ist, wobei ein Abgasstrom durch die Gasturbine und die Zusatzsteuerung auf etwa 450°C aufgeheizt wird. Durch den Rekuperations-Wärmetauscher kann so der Abluftstrom auf eine Temperatur von ca. 400°C vor der Katalysatoreinheit aufgeheizt werden, ohne dass es einer weiteren Zusatzfeuerung im Abluftstrom bedarf.

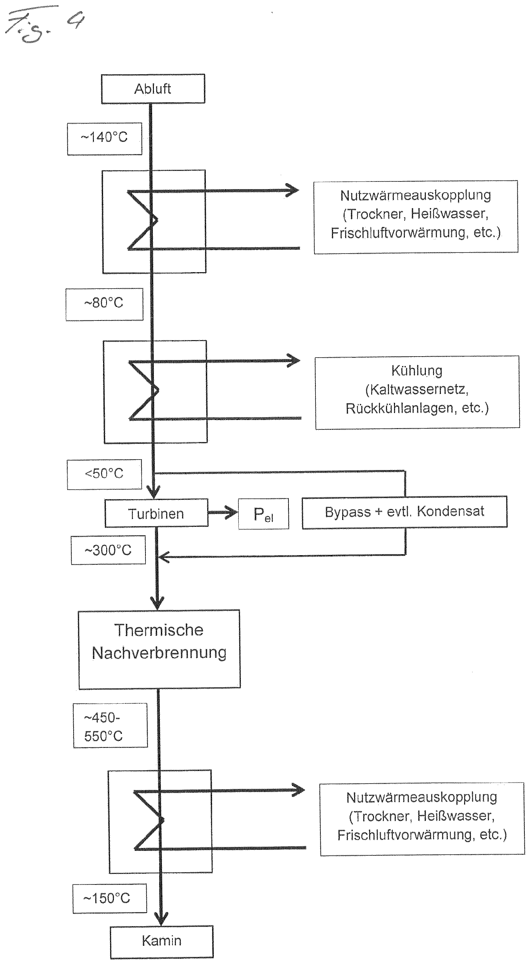

Gemäß Fig. 4 ist eine direkte Abluftreinigung mit thermischer Nachbehandlung dargestellt. Die Anordnung gemäß Fig. 4 entspricht im Wesentlichen der Anordnung von Fig. 1, wobei statt einem Katalysator als Reinigungseinheit eine thermische Nachverbrennungseinheit vorgesehen ist. Diese thermische Nachverbrennungseinheit weist insbesondere einen gasbetriebenen Brenner auf, durch welchen durch eine entsprechende Gasführung des Abgasstromes die flüchtigen organischen Substanzen im Abgasstrom thermisch umgesetzt oder verbrannt werden. Bei der Anordnung gemäß Fig. 4 kann eine Zusatzfeuerung entfallen. Durch die thermische Nachverbrennung wird die Abluft auf eine Temperatur von ca. 450°C bis 550°C erhitzt. Die gewonnene Wärme wird wie auch bei der Anordnung von Fig. 4 durch einen Wärmetauscher genutzt und ausgekoppelt. Insbesondere kann die Wärme für die Trocknungsanlage, zur Heißwassergewinnung, zur Frischluftvorwärmung oder zu einem anderen Zweck eingesetzt werden. Der Abgasstrom mit einer verbliebenen Temperatur von ca. 150°C wird über einen Kamin an die Umgebung abgegeben.

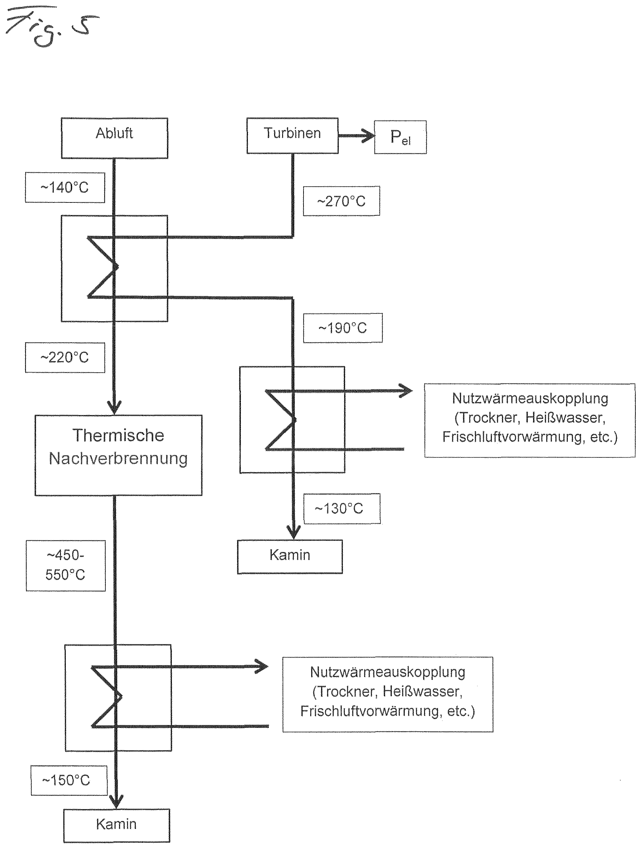

Die Anordnung und der Verfahrensablauf gemäß Fig. 5 entsprechen der Anordnung und dem Ablauf von Fig. 2, wobei jedoch statt einer Zusatzfeuerung und einer Katalysatoreinheit eine thermische Nachverbrennungseinheit als Reinigungseinheit vorgesehen ist. Durch die thermische Nachverbrennungseinheit wird der Abluftstrom auf eine Austrittstemperatur von ca. 450°C bis 550°C aufgeheizt, wobei organische Schadstoffe in der Abluft verbrannt oder thermisch umgesetzt werden. Die hohe Resttemperatur des Abgasstromes wird über einen Wärmetauscher ausgekoppelt, so dass der Abluftstrom mit einer Resttemperatur von ca. 150°C über einen Kamin an die Umgebung abgeführt wird.

## Patentansprüche

1. Verfahren zur Oberflächenbehandlung eines Werkstücks, bei dem in einem Arbeitsraum eine Beschichtung auf das Werkstück aufgebracht und/oder das beschichtete Werkstück getrocknet wird, wobei eine mit Schadstoff beladene Abluft entsteht und aus dem Arbeitsraum abgeführt wird, und mittels mindestens einer Gasturbine Wärme für die Oberflächenbehandlung gewonnen und ein Generator zur Stromerzeugung angetrieben werden,
wobei die aus dem Arbeitsraum abgeführte und mit Schadstoff beladene Abluft direkt oder indirekt durch die Gasturbine aufgeheizt wird,
**dadurch gekennzeichnet,**
**dass** die aufgeheizte Abluft einem Katalysator zugeführt wird, durch welchen Schadstoffe der aufgeheizten Abluft bei einer gegebenen Umsetzungstemperatur umgesetzt und reduziert werden, wobei sich die Temperatur der schadstoffreduzierten Abluft erhöht, und
**dass** die durch den Katalysator schadstoffreduzierte Abluft anschließend einem primären Wärmetauscher zugeführt wird, durch welchen Wärme aus der Abluft abgeführt wird.

2. Verfahren nach Anspruch 1,
**dadurch gekennzeichnet,**
**dass** die Abluft durch die Gasturbine und eine Zusatzfeuerung auf die Umsetzungstemperatur aufgeheizt wird.

3. Verfahren nach Anspruch 1 oder 2,
**dadurch gekennzeichnet,**
**dass** die Abluft zur direkten Aufheizung als Verbrennungsluft in einen Brenner der Gasturbine und/oder der Zusatzfeuerung eingeleitet wird.

4. Verfahren nach Anspruch 3,
**dadurch gekennzeichnet,**
**dass** die Abluft vor einem Zuführen als Verbrennungsluft in einen Brenner der Gasturbine auf eine vorgegebene Abkühltemperatur abgekühlt wird, wobei ein mit Schadstoffen beladenes Kondensat ausfällt, und
**dass** nach Zuführung der abgekühlten Abluft in die Gasturbine das Kondensat dem Abgas der Gasturbine, insbesondere durch Einsprühen, wieder zugeführt wird.

5. Verfahren nach einem der Ansprüche 1 oder 2,
**dadurch gekennzeichnet,**
**dass** die Abluft zur indirekten Aufheizung durch einen Aufheiz-Wärmetauscher geleitet wird, welcher von einem Heizmedium durchströmt wird, welches durch die Gasturbine und/oder der Zusatzfeuerung beheizt wird.

6. Verfahren nach Anspruch 5,
**dadurch gekennzeichnet,**
**dass** als Heizmedium das Abgas der Gasturbine und/oder der Zusatzfeuerung verwendet wird.

7. Verfahren nach einem der Ansprüche 2 bis 5,
**dadurch gekennzeichnet,**
**dass** die Zusatzfeuerung der Gasturbine nachgeschaltet wird.

8. Verfahren nach einem der Ansprüche 1 bis 7,
**dadurch gekennzeichnet,**
**dass** eine in dem Wärmetauscher gewonnene Wärme dem Arbeitsraum zugeführt wird, in welchem die Oberflächenbehandlung durchgeführt wird.

9. Anlage zur Oberflächenbehandlung eines Werkstücks, insbesondere zum Durchfuhren des Verfahrens nach einem der Ansprüche 1 bis 8, mit
- einem Arbeitsraum, in welchem die Oberflächenbehandlung durchführbar ist, wobei eine mit Schadstoff beladene Abluft entsteht,
- einer Abführeinrichtung zum Abführen der mit Schadstoff beladenen Abluft aus dem Arbeitsraum und
- mindestens einer Gasturbine, welche zum Erzeugen von Wärme für die Oberflächenbehandlung ausgebildet ist und durch welche ein Generator zur Stromerzeugung angetrieben ist,
- wobei die Gasturbine ausgebildet ist, die aus dem Arbeitsraum abgeführte und mit Schadstoff beladene Abluft direkt oder indirekt aufzuheizen,
**dadurch gekennzeichnet,**
- **dass** ein Katalysator vorgesehen ist, zu welchem die aufgeheizte Abluft zuführbar ist und durch welchen unter weiterer Erhöhung der Temperatur der Abluft die Schadstoffe der Abluft bei einer gegebenen Umsetzungstemperatur umsetzbar und reduzierbar sind, und
- **dass** dem Katalysator ein primärer Wärmetauscher nachgeschaltet ist, durch welchen Wärme aus der schadstoffreduzierten Abluft abführbar ist.

10. Anlage nach Anspruch 9,
**dadurch gekennzeichnet,**
**dass** zum Aufheizen der Abluft zusätzlich zur Gasturbine mindestens eine Zusatzfeuerung vorgesehen ist.

11. Anlage nach Anspruch 9 oder 10,
**dadurch gekennzeichnet,**
**dass** von der Abführeinrichtung eine Abführleitung zu einem Brenner der Gasturbine und/oder der Zusatzfeuerung vorgesehen ist, wobei die Abluft zur direkten Aufheizung dem Brenner als Verbrennungsluft zuführbar ist.

12. Anlage nach Anspruch 10,
**dadurch gekennzeichnet,**
**dass** die Abführleitung durch einen Abkühl-Wärmetauscher geführt ist, durch welchen die Abluft vor einem Zuführen in den Brenner abkühlbar und ein mit Schadstoff beladenes Kondensat ausfällbar ist, und
**dass** der Gasturbine eine Sprüheinrichtung nachgeschaltet ist, durch welche das ausgefällte Kondensat dem Abgas der Gasturbine wieder zuführbar ist.

13. Anlage nach Anspruch 9 oder 10,
**dadurch gekennzeichnet,**
**dass** zwischen der Abführeinrichtung und dem Katalysator eine Zuführleitung vorgesehen ist, welche durch einen Aufheiz-Wärmetauscher geführt ist, welcher durch die Gasturbine und/oder die Zusatzfeuerung beheizt ist.

14. Anlage nach einem der Ansprüche 9 bis 13,
**dadurch gekennzeichnet,**
**dass** der Katalysator ein Oxydationskatalysator ist.

## Claims

1. Method for the surface treatment of a workpiece, in which a coating is applied to the workpiece and/or the coated workpiece is dried in a working space, wherein exhaust air laden with pollutant arises and is discharged from the working space, and by means of at least one gas turbine heat for the surface treatment is obtained and a generator for the generation of electricity is driven,
wherein the exhaust air discharged from the working space and laden with pollutant is heated up directly or indirectly by the gas turbine,
**characterized in that**
the heated-up exhaust air is fed to a catalyst, by which pollutants of the heated-up exhaust air are converted and reduced at a given conversion temperature, wherein the temperature of the pollutant-reduced exhaust air increases, and
**in that** the exhaust air reduced of pollutants due to the catalyst is subsequently fed to a primary heat exchanger, through which heat from the exhaust air is discharged.

2. Method according to claim 1,
**characterized in that**
the exhaust air is heated up to the conversion temperature by the gas turbine and an additional firing.

3. Method according to claim 1 or 2,
**characterized in that**
for direct heating-up the exhaust air is introduced as combustion air into a burner of the gas turbine and/or the additional firing.

4. Method according to claim 3,
**characterized in that**
before being fed as combustion air into a burner of the gas turbine the exhaust air is cooled down to a predetermined cooling-down temperature, wherein a condensate laden with pollutants is precipitated, and
**in that** after feeding the cooled-down exhaust air into the gas turbine the condensate is refed to the exhaust gas of the gas turbine, in particular through spraying.

5. Method according to any one of claims 1 or 2,
**characterized in that**
for indirect heating-up the exhaust air is conveyed through a heating-up heat exchanger, which is flowed through by a heating medium that is heated by the gas turbine and/or the additional firing.

6. Method according to claim 5,
**characterized in that**
as heating medium the exhaust gas of the gas turbine and/or the additional firing is used.

7. Method according to any one of claims 2 to 5,
**characterized in that**
the additional firing is connected downstream of the gas turbine.

8. Method according to any one of claims 1 to 7,
**characterized in that**
heat obtained in the heat exchanger is fed to the working space, in which the surface treatment is carried out.

9. System for the surface treatment of a workpiece, in particular for carrying out the method according to any one of claims 1 to 8, having
- a working space, in which the surface treatment can be carried out, wherein exhaust air laden with pollutant arises,
- a discharge means for discharging the exhaust air laden with pollutant from the working space and
- at least one gas turbine which is designed for producing heat for the surface treatment and by which a generator for the generation of electricity is driven,
- wherein the gas turbine is designed for the direct or indirect heating-up of the exhaust air discharged from the working space and laden with pollutant, **characterized in that**
- a catalyst is provided, to which the heated-up exhaust air can be fed and by which, upon a further increase of the temperature of the exhaust air, the pollutants of the exhaust air can be converted and reduced at a given conversion temperature, and
- **in that** downstream of the catalyst a primary heat exchanger is connected, through which heat from the pollutant-reduced exhaust air can be discharged.

10. System according to claim 9,
**characterized in that**
to heat up the exhaust air at least one additional firing is provided in addition to the gas turbine.

11. System according to claim 9 or 10,
**characterized in that**
from the discharge means a discharge line to a burner of the gas turbine and/or the additional firing is provided, wherein, for direct heating-up, the exhaust air can be fed to the burner as combustion air.

12. System according to claim 10,
**characterized in that**
the discharge line is led through a cooling-down heat exchanger, through which the exhaust air can be cooled down prior to being fed into the burner and a condensate laden with pollutant can be precipitated, and
**in that** downstream of the gas turbine a spraying means is connected, through which the precipitated condensate can be refed to the exhaust gas of the gas turbine.

13. System according to claim 9 or 10,
**characterized in that**
between the discharge means and the catalyst a feed line is provided, which is led through a heating-up heat exchanger that is heated by the gas turbine and/or the additional firing.

14. System according to any one of claims 9 to 13,
**characterized in that**
the catalyst is an oxidation catalyst.

## Revendications

1. Procédé de traitement de surface d'une pièce à usiner, pour lequel dans un espace de travail un revêtement est appliqué sur la pièce à usiner et/ou la pièce à usiner revêtue est séchée, dans lequel un air vicié chargé en polluant apparaît et est évacué de l'espace de travail, et de la chaleur pour le traitement de surface est obtenue au moyen d'au moins une turbine à gaz et un générateur est entraîné pour la génération de courant,
dans lequel l'air vicié évacué de l'espace de travail et chargé en polluant est chauffé directement ou indirectement par la turbine à gaz,
**caractérisé en ce que**
l'air vicié chauffé est amené à un catalyseur, par lequel des polluants de l'air vicié chauffé sont convertis et réduits à une température de conversion donnée, dans lequel la température de l'air vicié réduit en polluant augmente, et
**en ce que** l'air vicié réduit en polluant par le catalyseur est ensuite fourni à un échangeur de chaleur primaire par lequel de la chaleur est évacuée de l'air vicié.

2. Procédé selon la revendication 1,
**caractérisé en ce que**
l'air vicié est chauffé par la turbine à gaz et un chauffage supplémentaire à la température de conversion.

3. Procédé selon la revendication 1 ou 2,
**caractérisé en ce que**
l'air vicié est introduit pour le chauffage direct en tant qu'air de combustion dans un brûleur de la turbine à gaz et/ou du chauffage supplémentaire.

4. Procédé selon la revendication 3,
**caractérisé en ce que**
l'air vicié est refroidi avant une amenée en tant qu'air de combustion dans un brûleur de la turbine à gaz à une température de refroidissement prédéfinie, un condensat chargé en polluant se précipitant, et
**en ce qu'**après l'amenée de l'air vicié refroidi dans la turbine à gaz le condensat est fourni de nouveau aux gaz d'échappement de la turbine à gaz, en particulier par pulvérisation.

5. Procédé selon l'une des revendications 1 ou 2,
**caractérisé en ce que**
l'air vicié est conduit pour le chauffage indirect par un échangeur de chaleur de chauffage qui est traversé par un agent chauffant qui est chauffé par la turbine à gaz et/ou le chauffage supplémentaire.

6. Procédé selon la revendication 5,
**caractérisé en ce que**
les gaz d'échappement de la turbine à gaz et/ou du chauffage supplémentaire sont utilisés en tant qu'agent chauffant.

7. Procédé selon l'une des revendications 2 à 5,
**caractérisé en ce que**
le chauffage supplémentaire est monté en aval de la turbine à gaz.

8. Procédé selon l'une des revendications 1 à 7,
**caractérisé en ce que**
de la chaleur obtenue dans l'échangeur de chaleur est fournie à l'espace de travail dans lequel le traitement de surface est réalisé.

9. Installation de traitement de surface d'une pièce à usiner, en particulier pour la réalisation du procédé selon l'une des revendications 1 à 8, comportant
- un espace de travail dans lequel le traitement de surface peut être réalisé, un air vicié chargé en polluant apparaissant,
- un dispositif d'évacuation pour l'évacuation de l'air vicié chargé en polluant hors de l'espace de travail et
- au moins une turbine à gaz qui est réalisée pour la génération de chaleur pour le traitement de surface et par laquelle un générateur est entraîné pour la génération de courant,
- dans laquelle la turbine à gaz est réalisée afin de chauffer directement ou indirectement l'air vicié évacué de l'espace de travail et chargé en polluant,
**caractérisée en ce que**
- un catalyseur est prévu auquel l'air vicié chauffé peut être amené et par lequel en augmentant encore la température de l'air vicié les polluants de l'air vicié peuvent être convertis et réduits à une température de conversion donnée, et
- **en ce qu'**un échangeur de chaleur primaire est monté en aval du catalyseur par lequel de la chaleur peut être évacuée de l'air vicié réduit en polluant.

10. Installation selon la revendication 9,
**caractérisée en ce que**
au moins un chauffage supplémentaire est prévu pour le chauffage de l'air vicié outre la turbine à gaz.

11. Installation selon la revendication 9 ou 10,
**caractérisée en ce que**
une conduite d'évacuation est prévue du dispositif d'évacuation à un brûleur de la turbine à gaz et/ou au chauffage supplémentaire, l'air vicié pouvant être fourni pour le chauffage direct au brûleur en tant qu'air de combustion.

12. Installation selon la revendication 10,
**caractérisée en ce que**
la conduite d'évacuation est guidée par un échangeur de chaleur de refroidissement, par lequel l'air vicié peut être refroidi avant une alimentation dans le brûleur et un condensat chargé en polluant peut être précipité, et
**en ce qu'**un dispositif de pulvérisation est monté en aval de la turbine à gaz, par lequel le condensat précipité peut de nouveau être fourni aux gaz d'échappement de la turbine à gaz.

13. Installation selon la revendication 9 ou 10,
**caractérisée en ce que**
une conduite d'amenée est prévue entre le dispositif d'évacuation et le catalyseur, laquelle est guidée par un échangeur de chaleur de chauffage qui est chauffé par la turbine à gaz et/ou le chauffage supplémentaire.

14. Installation selon l'une des revendications 9 à 13,
**caractérisée en ce que**
le catalyseur est un catalyseur d'oxydation.
